# EUROPEAN PATENT SPECIFICATION

(11) **EP 0 791 262 B1**
(45) Date of publication and mention of the grant of the patent: **22.10.2003**
(21) Application number: 95935964.7
(22) Date of filing: 06.11.1995
(51) Int. Cl.: H04M 1/57

(54) **A SYSTEM OF TRANSMITTING THE SUBSCRIBER NUMBER OF A CALLING SUBSCRIBER TO A SUBSCRIBER TERMINAL**
SYSTEM ZUR ÜBERTRAGUNG DER RUFNUMMER EINES ANRUFENDEN TEILNEHMERS ZU EINEM TEILNEHMERENDGERÄT
SYSTEME DE TRANSMISSION DU NUMERO D'UN ABONNE APPELANT A UNE INSTALLATION TERMINALE D'ABONNE

(30) Priority: 08.11.1994 FI 945254
(43) Date of publication of application: 27.08.1997
(73) Proprietor: Nokia Corporation, 02150 Espoo (FI)
(72) Inventor: KAISTO, Arto, FIN-91100 Ii (FI); VÄHÄLUMMUKKA, Kari, FIN-04310 Tuusula (FI)
(74) Representative: Äkräs, Tapio Juhani
(86) International application number: FI9500605
(87) International publication number: WO96014702

(56) References cited:
- DE-C- 3 128 529
- US-A- 5 031 207

## Description

The invention relates to telephone networks and especially to an arrangement for displaying the subscriber number of a calling subscriber on the display of a terminal equipment of a called subscriber.

Automatic exchanges have made it possible to provide different arrangements by which the subscriber number of a calling subscriber, subscriber A, can be shown on the display of a telephone or a separate peripheral unit of a called subscriber, subscriber B. The calling number detection is a facility of subscriber B. The facility has been developed to make it possible for the called subscriber to decide, upon seeing the number of the calling subscriber, whether to answer the call or not, and thereby ignore undesired calls. Usually this facility is a service that the subscriber has to buy from an operator.

European Patent Specification No. 0,076,646 discloses a method of displaying the subscriber number of subscriber A on the terminal equipment of subscriber B when the network uses standard signalling. When the terminating exchange has checked that subscriber B is authorized to use the service, it requests the exchange of subscriber A to supply identification signals and subsequently transfers the control of the calling process to a specific identification detector located in the exchange of subscriber B. The detector controls the calling process until said identification signals have been received and the call has been completed. The detector thus controls the signalling protocol together with the exchange of subscriber A, whereby, alternately, the exchange sends a digit, the identification detector requests for the next digit, etc. It is characteristic of the method that the exchange knows what telephones have the number display facility, and as a call is destined to such a terminal equipment, the exchange transmits an interrogation message to the exchange of subscriber A, whereafter the control is transferred to a specific identification detector. The drawback of the method disclosed in the publication is that a specific identification detector is needed to signal directly with the exchange of the calling subscriber. Another major drawback is that the exchange always uses the same signalling technique to transmit the subscriber number to subscriber B, whereby the subscribers have to buy telephones that use the same signalling technique as the exchange concerned, i.e. equipment of the same manufacturer.

European Patent Specification No. 0,148,836 discloses a method and arrangement for sending a data message to subscriber B during a silent interval between a first and a second ringing signal. The message may be the subscriber number of a calling party. The arrangement comprises several line units, each of which is associated with an individual ringing circuit. Each line unit comprises a detector means that detects a first ringing signal and generates a status signal corresponding to the next silent interval. In response to the status signal, the transmitter generates a frequency-shift-keyed message, which is transmitted during the silent interval between ringing signals. It is characteristic of the method and apparatus that first a ringing signal supplied to subscriber B and then a silent interval between ringing signals must be identified, and it is not until after this that a potential message, such as the subscriber number of a calling party, is transmitted. Since the exchange always uses the same signalling technique to transmit a subscriber number to subscriber B, the subscribers must buy telephones that use the same signalling technique as the exchange concerned, i.e. equipment of the same manufacturer.

European Patent Specification No. 0,150,181 describes a subscriber terminal, such as a telephone, that is able to receive a modulated or unmodulated signal transmitted from the exchange during a silent interval between ringing signals, to store the information contained in the modulated signal and to show it on the display. To function correctly, a telephone must use the same signalling technique as the exchange, i.e. only telephones of a certain manufacturer can be connected to the exchange if the CLIP service is to be used.

A drawback of the known methods is that they are bound to the signalling technique by which the subscriber number of a calling subscriber is transmitted to a called subscriber. There are two signalling techniques: a subscriber number is either transmitted between ringing signals by modem signalling, as described in the so-called Bellcore standard, or transmitted before the first ringing signal by DTMF signalling (Dual Tone Multifrequency), as described in the ETSI standard. The known methods thus require that the exchange should comprise separate equipment for call processing during the transmission of the calling number and for detecting silent intervals between ringing signals, during which the subscriber number will be transmitted. It is a major drawback that the calling number detection facility added to the exchange is bound to the display technique selected by the manufacturer of the subscriber terminal, such as a telephone or separate number display unit. In other words, the facility binds both the telephone operator and the customer of the operator to display units of a certain manufacturer.

DE-C-3128529 discloses a subscriber-specific memory located in the subscriber terminal or one of the network elements, such as the exchange, where storing subscriber data in association with the directory number of the called subscriber. The called subscriber can program into the memory directory numbers of calling subscribers, as well as the names of the calling subscribers or other information relating to the stored directory numbers. The subscriber can also select whether the directory number of the calling subscriber will be displayed in the subscriber terminal, or will it be replaced by other information, such as calling subscriber's name. Thus, when a call is received from a directory number stored in the memory, the directory number of the calling subscriber and/or associated information will be displayed in the subscriber terminal of the called subscriber.

US-A-5031207 discloses an ISDN terminal capable of communicating in accordance with number of data communication standards. Telephone numbers of other terminals as well as information on the data communication standards used by the other terminals are stored in the terminal according to US-A-5031207. This enables the terminal to automatically use the proper data communication standard according to the telephone number of the called or calling terminal.

The object of the present invention is to provide a method of transmitting a calling subscriber number, avoiding all drawbacks of the known methods. The object is to provide a method that can be applied in an exchange of any manufacturer, that does not require separate peripheral equipment, and that allows a subscriber terminal of any manufacturer, with a calling number display facility, to be connected to a telephone network system in which the method is used, independently of the signalling parameters used by the terminal. The system must enable the display of a calling number on the telephone of subscriber B of an analogue or a MUX connection, or on a peripheral equipment connected to the telephone. It must also be possible to select the signalling technique, i.e. modem signalling or DTMF (Dual Tone MuItifrequency), individually for each subscriber line. If the signalling is modem signalling, it is possible to display on the subscriber terminal the date and time, as well as the subscriber number. If the signalling is DTMF signalling, only the subscriber number or numbers are displayed. Since there are various methods in which DTMF signalling is used and which differ from one another with respect to the frame structure, the 'frame structure' needed in the transmission is also transmitted.

In call set-up, it must be possible to select the transmission moment individually for each subscriber line. It must also be possible to transfer the information either before a ringing signal is supplied to a subscriber line, between a first and a second ringing signal, or immediately after the answer.

The objects are achieved with a method of claim 1 and a telephone network system of claim 7. The preferred embodiments of the system of the invention relating to the number transmission moment are disclosed in the attached dependent claims.

In the invention, data on the type of the number display unit of the subscriber, as well as conventional subscriber data, are first stored in the subscriber file of the exchange. Second, a specific calling number delivery file is added to the exchange. The file contains, for each type of number display unit, all parameters needed to transmit the number of a calling subscriber from the exchange to a telephone of a called subscriber and to show the subscriber number on the display of the telephone or separate display unit. Information on the display unit is stored in the subscriber data of the subscriber file as the subscriber joins the number display service. In practice, it is sufficient for the subscriber to inform the operator of the manufacturer and type of the terminal equipment, whereby the operator stores the index of the equipment in the subscriber file, in the data of the subscriber concerned. As the exchange of a subscriber receives a request to transmit a call to a subscriber that has bought the number display service, the subscriber file is searched, as usual, for subscriber data. The subscriber data indicate whether the subscriber has joined the number display service, and they also contain the index of the number display unit type of the subscriber. After this, the calling number delivery file is checked to find which data correspond to the index concerned. The information shows what signalling technique the manufacturer of the subscriber number display unit has used, and the number of the calling subscriber is transmitted from the exchange to the telephone of the called subscriber using the same signalling technique. If the subscriber changes his terminal equipment to another type of terminal equipment, the subscriber file is updated by changing the index of the display unit type, whereby new data will correspond to the index in the calling number delivery file. If the information on the display unit used by the subscriber is not found in the calling number delivery file at all, the data on the new equipment is added thereto. A plural number of subscribers thus have the same index in the subscriber file, which means that they have a number display unit of the same type and that the index is stored in the same location in the calling number file, i.e. all necessary information about the number display unit concerned in stored in this location. The subscribers are thus free to select an equipment of any manufacturer, independently of the signalling technique used by the equipment, and it is always possible to transmit the number of the calling subscriber to the called subscriber.

If the information contains a parameter indicating that the subscriber number must be transmitted before the first ringing signal, the procedure according to the first embodiment of the invention is followed.

The second embodiment defines the procedure to be followed if the number is to be transmitted after the first ringing signal. This embodiment is characterized by time supervision. Here the subscriber number will be transmitted when a certain period of time has elapsed since the predetermined instant. Unlike in prior art arrangements, no special detectors are needed for ringing signals and for silent periods between them.

The third embodiment defines the procedure to be followed when the parameters read from the file indicate that the subscriber number data must not be sent until after the answer.

In the following the invention will be described in greater detail by means of preferred embodiments and with reference to the attached drawings, in which
fig. 1 shows the functions of an exchange that are essential to the invention,
fig. 2 is a block diagram illustrating a method of the invention,
fig. 3 shows one possible file structure,
fig. 4 illustrates a procedure for displaying subscriber number information before a ringing signal,
fig. 5 illustrates a procedure for displaying subscriber number information after the first ringing signal, and
fig. 6 illustrates a procedure for displaying subscriber number information after the response.

All modern exchanges comprise some of the same functions, which can be divided into groups e.g. as follows:
1) call control,
2) signalling,
3) connections,
4) network and system maintenance,
5) charging.

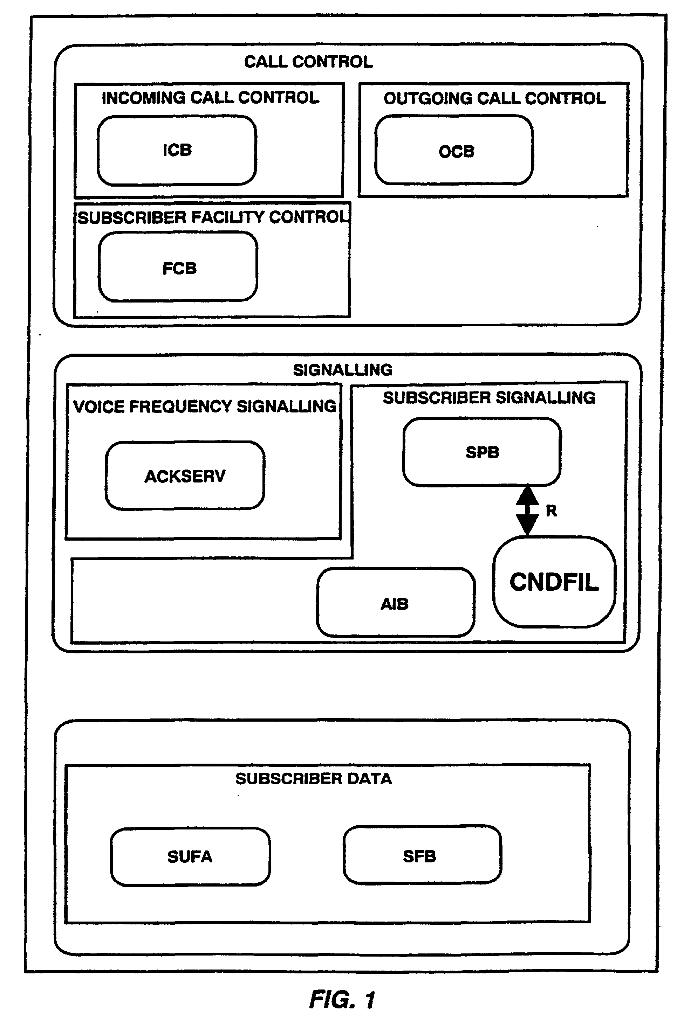

Fig. 1 shows a known exchange, presenting the functions that are essential to the invention in accordance with the above grouping. Call control comprises a call control program block ICB on the input side, which performs call control functions in the call set-up and supervision steps. It also comprises a call control program block OCB on the output side, which performs call control functions in the call set-up and supervision steps, and a facility control program block FCB, which carries out procedures in which facility information is processed in the subscriber database.

The block that provides signalling services comprises a channel service program block ACSERV, which offers use services to MFC and PBR equipments. Channel services mean transmission of messages within an exchange on a PCM bus; MFC equipments are multifrequency transceivers receiving messages from a subscriber terminal; and PBR equipments are equipments receiving messages of a subscriber terminal that have been sent with the keys of the telephone. The subscriber signalling service block of a signalling service unit comprises program blocks offering subscriber signalling service, e.g. block SPB, which conducts call signalling functions in the call set-up and supervision steps, and further comprises block AIB, which controls subscriber signalling of an analogue subscriber line.

The service unit that processes subscriber data comprises a program block SFB for reading facility information, the block reading subscriber data from the subscriber database, and a supply block SUFA, through which the operator updates subscriber data.

The above functions are found in all exchange systems.

The present invention introduces a new block: Calling Number Delivery File CNDFIL. The file contains the signalling data of all the calling number displaying terminal equipments that are used by the subscribers connected to the exchange. For example, if three different types of terminal equipments are used, the file comprises three records, each of which contains all the parameters needed for transmitting a calling number to one type of terminal equipment of an analogue connection. File CNDFIL thus contains both the signalling protocol information, which shows whether modem or DTMF signalling is used, and the transmission moment, i.e. whether the number is sent before the first ringing signal, during a silent interval between ringing signals, or not until after the answer. The file may also contain the allowed length of a digit sequence to be transmitted, the transmission order of such sequences, information about individual potentially deleted digits, information about different restrictions, etc.

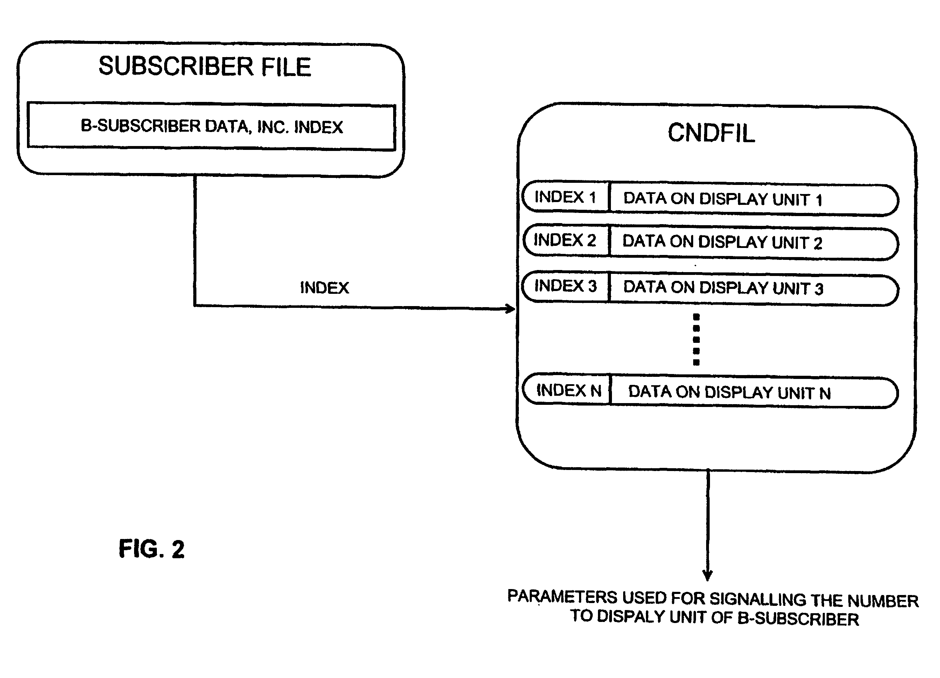

Fig. 2 is a block diagram illustrating the basic idea of the invention. An index is added to the subscriber data of the subscriber database. As the call control requests for subscriber data, it appears from the data that the subscriber has subscribed to the calling number display service. The point 'index' in the subscriber data shows what type of display unit the subscriber uses. The information found in the record located under this index is then read from file CNDFIL, the information containing the parameters used by the display unit concerned. The subscriber number is transmitted to the called subscriber by using these parameters.

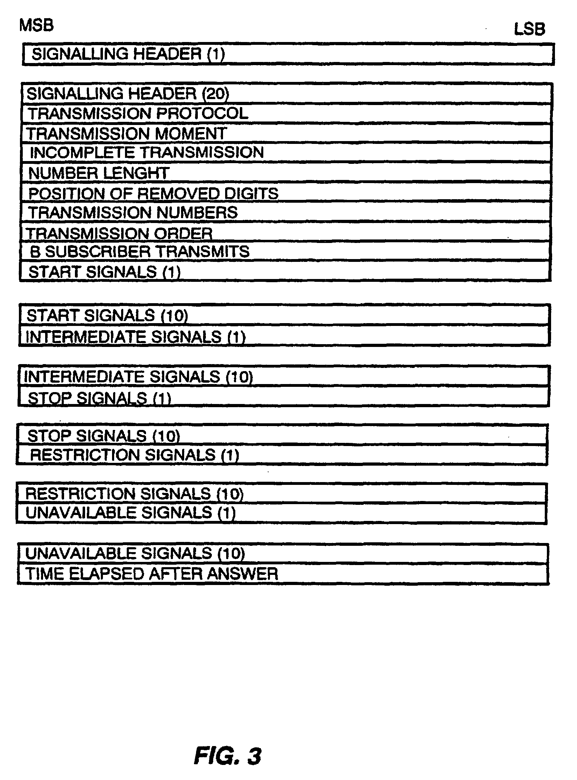

Fig. 3 shows one possible record structure for a terminal equipment. In addition to the above-mentioned matters, it comprises e.g. different start and stop signals. The file belongs to a system block for subscriber signalling services, which comprises a block SPB that performs signalling functions in the call set-up and supervision steps; the two blocks being connected by a bus R shown in fig. 1. Apart from the bus connection, the file is also connected to the supply block SUFA, through which the operator updates the subscriber file and thereby the index using a suitable MML command. The subscriber data index of the subscriber file determines the type of the subscriber terminal, which is looked for in file CNDFIL, so when the subscriber terminal is changed, it suffices to update the subscriber file through the supply block SUFA. If the subscriber starts to use a terminal whose information is not found in file CNDFIL, the data on the equipment must be added to the file as a new record. After this, if subscribers start to use more equipments like this, it suffices to update the subscriber file.

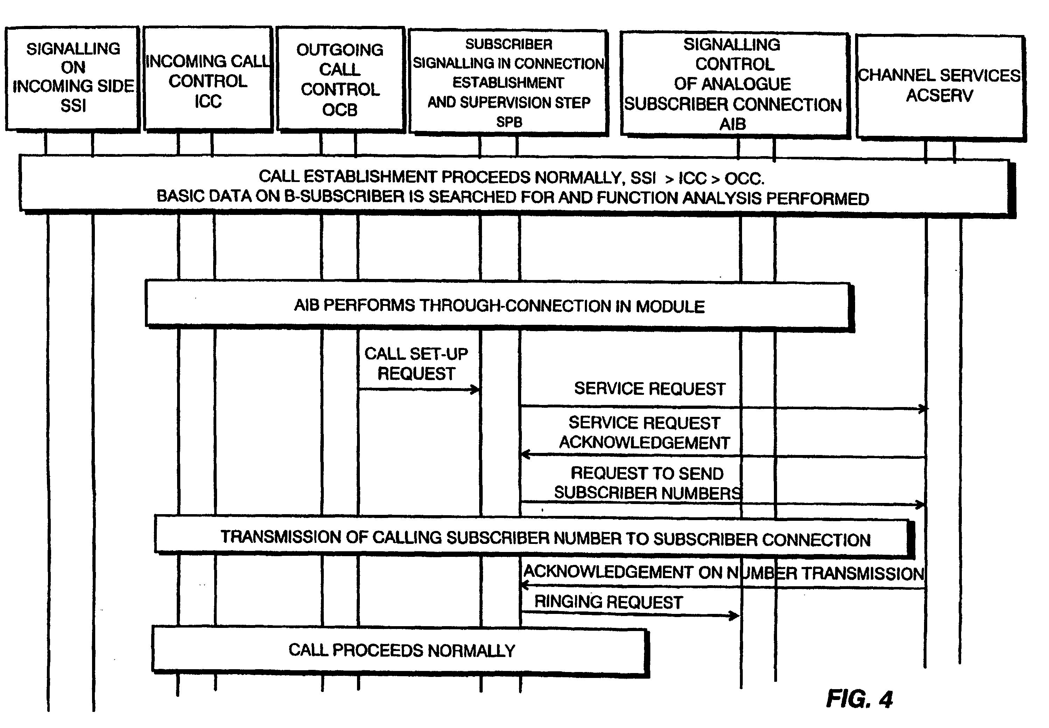

With reference to fig. 4, we shall now study a situation where the exchange is to transmit a call from subscriber A to subscriber B and to display number data before a ringing signal. The figure is relevant to both voice-frequency signalling and modem signalling. The exchange to which subscriber B is connected receives A-number signalling concerning an incoming call via a Common Channel CH. At first, establishment of a call proceeds in the normal manner: the processing proceeds from the signalling program block on the input side to the call control block on the input side and further to the call control program block on the output side, the latter searching the subscriber database for the basic data on subscriber B and performing a facility analysis. After this, through-connection is performed. The subscriber signalling block SPB fetches the data on the calling number display unit of subscriber B from the calling number delivery file CNDFIL, the data showing the correct moment for transmitting the calling number. In this example, the transmission moment is found to be 'before the first ringing signal.'

After receiving a call set-up request, the block SPB performing subscriber signalling sends a service request to the channel service block ACSERV. The signalling technique, i.e. information showing whether modem or DTMF signalling is used, is obtained from the new file CNDFIL. Block ACSERV acknowledges the service request, whereby block SPB sends block ACSERV a request to send subscriber number data. The request message contains a sequence of characters that is transmitted by block ACSERV to a subscriber line and is to be shown on the display. The number of digits displayed is obtained from the new file CNDFIL.

If the call is a transferred call, the block SPB performing subscriber signalling reads instructions from file CNDFIL, the instructions stating whether to send the number of the original subscriber A or the number of the subscriber that has transferred the call (subscriber that has transferred first/last), or both, and in what order.

If the number data on the incoming call is not complete, if no number data is available, or if the calling subscriber has a number display barring facility, the signalling block SPB reads from file CNDFIL instructions stating what sequence of characters to send. Likewise, if the display of the subscriber terminal allows only a limited number of characters to be displayed and if the incoming number is longer than allowed, file CNDFIL indicates the sequence of characters that will be sent. The sending of the sequence of characters, whether the sequence is a complete subscriber number or some other sequence described above, is indicated in fig. 4 as 'transmission of calling subscriber number to subscriber line.' When the sequence of characters has been transmitted to subscriber B, the channel service block ACSERV acknowledges the transmission. When block ACSERV has acknowledged the transmission of the sequence of characters or the request for service has not been granted, block SPB sends a call request to an analogue line adapter, whereafter establishment of a call proceeds in the normal manner.

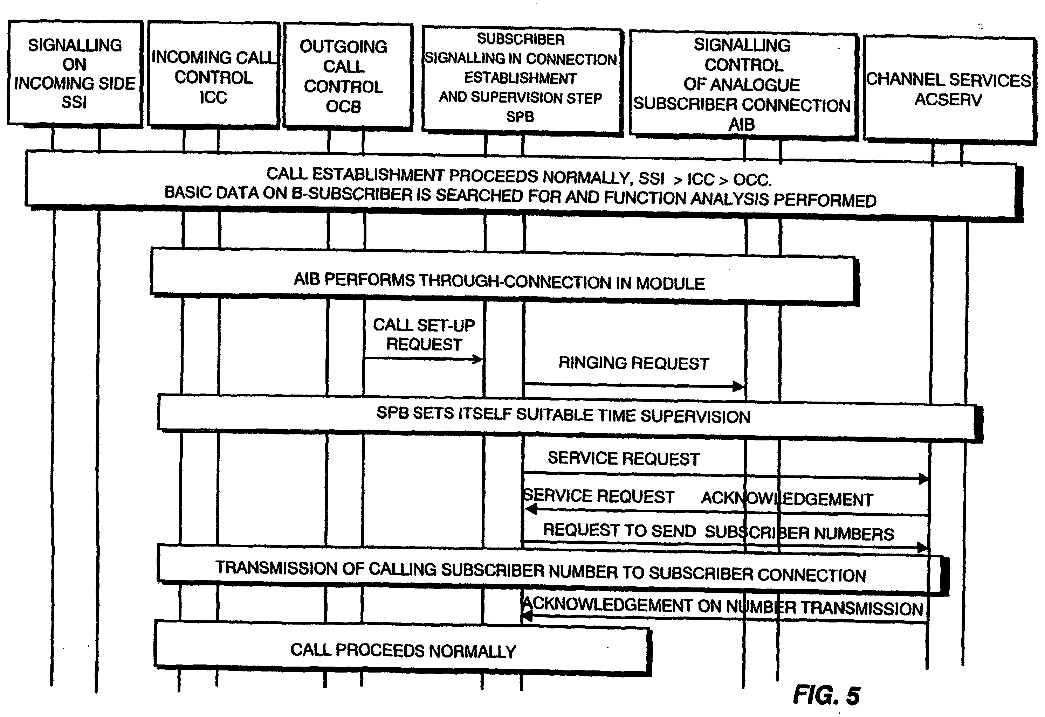

We shall now refer to fig. 5, which illustrates a process in which subscriber number data is displayed after the first ringing signal. The beginning of the process is as described in connection with fig. 4, i.e. first a facility analysis and then through-connection are performed. Information on the ringing moment is fetched from the new file CNDFIL, which in this example indicates that the transmission moment is 'after the first ringing signal,' i.e. during the first long silent interval. After receiving a call set-up request, the subscriber signalling service block SPB sends a call request to module AIB and simultaneously sets time supervision for itself according to the type of ringing. A suitable length for time supervision is the length of a ringing period + 500 ms. When the time for time supervision elapses, block SPB sends a service request to the signalling control block ACSERV of the analogue subscriber line. Block ACSERV acknowledges the service request by sending an acknowledgement. After this, block SPB requests block ACSERV to send the subscriber number, whereby it sends the number and acknowledges the transmission. After this, the call establishment proceeds in the normal manner.

In the above embodiment, block SPB must know the ringing periods. It is thus not applicable to subscriber modules in which ringing is implemented in ringing groups.

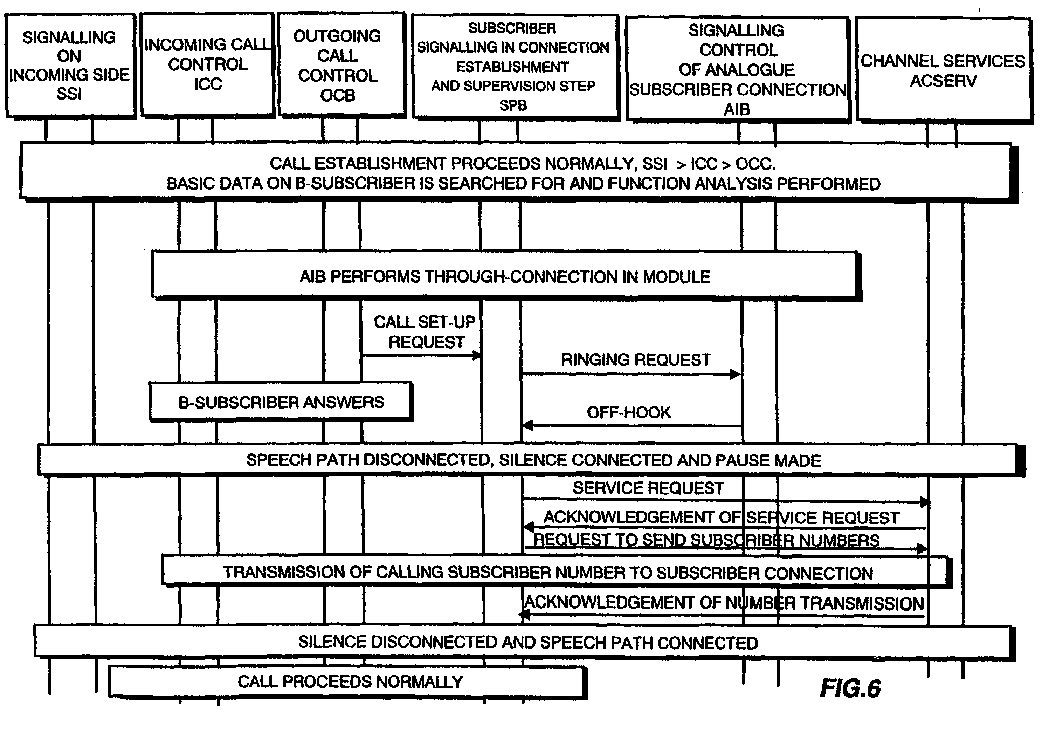

Fig. 6 shows a third embodiment in which the information obtained from the new file CNDFIL indicates that the calling subscriber number data must not be displayed until after the answer. In the figure this is indicated by the block 'subscriber B answers.' The subscriber signalling block SPB hereby sends the voice frequency signalling service block ACSERV a service request message once it has received an 'off-hook' message from said block, the message indicating that the called subscriber has picked up the receiver. Before the digits are sent, the speech path is disconnected from the calling subscriber, silence is connected to said subscriber, and a short pause is made. The length of the pause is read from file CNDFIL before subscriber number data is sent. When the subscriber number data has been sent, silence is disconnected and the speech path is re-connected.

Where the above examples concern a transfer facility, file CNDFIL is searched for data showing whether to send the number of the original subscriber A, or that of the subscriber than has transferred the call, or both, and in what order.

The number display facility is activated in the same way as the subscriber activates other service facilities, i.e. by keying a defined sequence of characters. After this, the calling subscriber number of each call destined to the subscriber concerned is displayed, if possible. Inactivation is conducted in the same way, i.e. by keying a defined sequence of characters. The outgoing call control receives the activity/inactivity data of the facility from the basic data on subscriber B.

The facility of the invention is available for normal analogue and MUX connections of the exchange, including Centrex extensions and members of a hunting group. The subscriber number data of subscriber line A are delivered supplemented with a national or international area code. In local calls, a trunk prefix and trunk code are also displayed in full. If the number data is incomplete, as much of the subscriber number is shown as possible, or the subscriber line is informed that the number of subscriber A is not available. The number of digits to be sent can be set individually for each terminal equipment.

When the subscriber is a Centrex subscriber, the extension number of the calling subscriber is displayed on the subscriber equipment of subscriber B, if the calling subscriber and the called subscriber are members of the same Centrex group. In an out-line Centrex call, no out-line number is added in front of the number to be transferred.

The above description and the associated figures are to be understood only as illustrating the present invention. It is obvious to those skilled in the art that the invention can be varied and modified in different ways without deviating from the scope of the invention disclosed in the attached claims.

## Claims

1. A method of transferring a calling subscriber number to a subscriber terminal in a telephone network system comprising at least one exchange with means for detecting calling subscriber number data and means for signalling the number data to a subscriber terminal of a called analogue subscriber line, and subscriber terminals associated with an exchange, the terminals having number display units for displaying said data on the number,
**characterized in that** the method comprises
storing display type data (SUFA) indicative of the type of the number display unit of each subscriber terminal,
storing signalling parameter data separately for each type of the number display units used by different subscriber terminals type-specifically in a file (CNDFIL) located in the exchange, and
when a connection is established from the exchange to a subscriber terminal, selecting the signalling technique employed for signalling the calling subscriber number data to the subscriber terminal of the called subscriber in dependence upon the signalling technique supported by the called subscriber terminal, said selecting comprising, based on the display type data (SUFA) indicative of the type of the number display unit of the called subscriber terminal, retrieving signalling parameters from the signalling parameter file (CNDFIL) of the type of the number display unit concerned, and
transmitting (SBF) the calling subscriber number data to the called subscriber terminal by means of a signalling technique according to said signalling parameters.

2. A method according to claim 1, **characterized in that** information indicating what kind of number display unit the subscriber has is stored subscriber-specifically in the subscriber database (SUFA), and that on the basis of this information the file (CNDFIL) is searched for signalling parameters used by this kind of number display unit.

3. A method according to claim 1, **characterized in that** the signalling parameter data of a subscriber terminal include data indicating the transmission protocol and transmission moment, and whether modem signalling or voice frequency signalling is used.

4. A method according to claim 3, **characterized in that** the transmission moment for the subscriber number data is before the first ringing signal.

5. A method according to claim 3, **characterized in that** the transmission moment for the subscriber number data is during a silent interval between ringing signals, and after a period of a constant length from the first ringing signal.

6. A method according to claim 3, **characterized in that** the transmission moment is after the subscriber has answered.

7. A telephone network system with at least one exchange, comprising
outgoing call control means (OCB), which perform call control functions in the call set-up, ringing and supervision steps, and which deliver the calling subscriber number,
signalling means (SPB) for performing signalling functions in the call set-up and supervision steps,
channel service means (ACSERV) for transmitting messages between an exchange and a subscriber terminal, and
analogue subscriber terminals associated with the exchange and connected to number display units for displaying the calling subscriber number data signalled from the exchange,
**characterized in that** the exchange comprises
a subscriber database (SUFA) for storing number display unit type data indicative of the type of the number display unit of each subscriber terminal, the call control means (OCB) being arranged to read data from said database,
storing means (CNDFIL) for storing in a file signalling parameter data separataly for each one of the different types of number display units used by different subscriber terminals,
subscriber signalling means (SPB) , for reading from the storing means (CNDFIL) the signalling parameter data for the the number display unit type indicated by the number display unit type data of a called subscriber terminal read from the subscriber database (SUFA) by the call control means (OCB),
channel service means (ACSERV) for transmitting the calling subscriber number data to the called subscriber terminal in dependence upon the signalling technique supported by the called subscriber terminal according to the signalling parameter data read at the moment defined by said read signalling parameters.

8. A system according to claim 7, **characterized in that** the signalling parameter data that has been read from the storing means (CNDFIL) indicates that the transmission moment for the subscriber number data is before the first ringing signal, whereby the exchange is arranged to supply a first ringing signal in response to an acknowledgement that has been received from the channel service means (ACSERV) and indicates that the subscriber number data has been transmitted to the subscriber terminal.

9. A system according to claim 7, **characterized in that** the signalling parameter data that have been read from the storing means (CNDFIL) indicate that the transmission moment for the subscriber number data is after the first ringing signal, whereby, in response to the first ringing signal supplied by the exchange, the subscriber signalling means (SPB) are arranged to start a time counter and, when the time set in the counter has elapsed, send the channel service means (ACSERV) a request to transmit the calling subscriber number data.

10. A system according to claim 7, **characterized in that** the signalling parameter data that has been read from the storing means (CNDFIL) indicates that the transmission moment for the subscriber number data is after the answer of the called subscriber, whereby, in response to the subscriber picking up the receiver, the subscriber signalling means (SPRB) are arranged to first disconnect the speech path and connect silence, and then send the channel service means (ACSERV) a request to transmit the calling subscriber number data.

11. A system according to claim 7, **characterized in that**, in response to the information received from the call control means indicating that the subscriber number data of the incoming call is incomplete, the subscriber signalling means (SPB) are arranged to read from the parameters stored in the storing means (CNDFIL) what sequence of characters will be sent.

## Patentansprüche

1. Verfahren zum Übertragen einer Nummer eines anrufenden Teilnehmers zu einem Teilnehmerendgerät in einem Telefonnetzwerksystem mit zumindest einer Vermittlung, die eine Einrichtung zum Erfassen von Nummerndaten eines anrufenden Teilnehmers und eine Einrichtung zum Signalisieren der Nummerndaten zu einem Teilnehmerendgerät einer angerufenen analogen Teilnehmerleitung aufweist, sowie mit einer Vermittlung verbundenen Teilnehmerendgeräten, wobei die Endgeräte Nummern-Anzeigeeinheiten zum Anzeigen der Nummerndaten aufweisen,
**gekennzeichnet durch**
Speichern von auf den Typ der Nummer-Anzeigeeinheit jedes Teilnehmerendgeräts hinweisenden Anzeigetypdaten (SUFA),
Speichern von Signalisierungsparameterdaten getrennt für jeden Typ der von unterschiedlichen Teilnehmerendgeräten verwendeten Nummern-Anzeigeeinheiten typen-spezifisch in einer sich in der Vermittlung befindenden Datei (CNDFIL), und
wenn eine Verbindung von der Vermittlung zu dem Teilnehmerendgerät aufgebaut wird, Auswählen der zum Signalisieren der Nummer des anrufenden Teilnehmers zu dem Teilnehmerendgerät des angerufenen Teilnehmers eingesetzten Signalisierungsmethode in Abhängigkeit von der von dem angerufenen Teilnehmerendgerät unterstützen Signalisierungsmethode, wobei das Auswählen basierend auf den auf den Typ der Nummer-Anzeigeeinheit des angerufenen Teilnehmerendgeräts hinweisenden Anzeigetypdaten (SUFA) ein Abfragen von Signalisierungsparametern von der Signalisierungsparameterdatei (CNDFIL) des Typs der betroffenen Nummern-Anzeigeeinheit aufweist, und
Übertragen (SBF) der Nummerndaten des anrufenden Teilnehmers zu dem angerufenen Teilnehmerendgerät anhand einer Signalisierungsmethode gemäß den Signalisierungsparametern.

2. Verfahren gemäß Anspruch 1, **dadurch gekennzeichnet, dass** die Art von Nummern-Anzeigeeinheit des Teilnehmers andeutende Informationen teilnehmer-spezifisch in der Teilnehmerdatenbank (SUFA) gespeichert werden, und dass die Datei (CNDFIL) auf der Grundlage dieser Informationen auf von dieser Art von Nummern-Anzeigeeinheit verwendete Signalisierungsparameter durchsucht wird.

3. Verfahren gemäß Anspruch 1, **dadurch gekennzeichnet, dass** die Signalisierungsparameterdaten eines Teilnehmerendgeräts Daten umfassen, die das Übertragungsprotokoll und den Übertragungszeitpunkt andeuten, und ob eine Modem-Signalisierung oder eine Sprachfrequenz-Signalisierung verwendet wird.

4. Verfahren gemäß Anspruch 3, **dadurch gekennzeichnet, dass** der Übertragungszeitpunkt für die Teilnehmer-Nummerndaten vor dem ersten Klingelsignal liegt.

5. Verfahren gemäß Anspruch 3, **dadurch gekennzeichnet, dass** der Übertragungszeitpunkt für die Teilnehmer-Nummerndaten während eines stillen Intervalls zwischen Klingelsignalen und nach einer Zeitdauer konstanter Länge von dem ersten Klingelsignal an liegt.

6. Verfahren gemäß Anspruch 3, **dadurch gekennzeichnet, dass** der Übertragungszeitpunkt nach der Beantwortung durch den Teilnehmer liegt.

7. Telefonnetzwerksystem mit zumindest einer Vermittlung, mit:
einer Steuereinrichtung für ausgehende Rufe (OCB), die Rufsteuerfunktionen beim Verbindungsaufbau, beim Klingeln und den Überwachungsschritten durchführt, und die die Nummer des anrufenden Teilnehmers übergibt,
einer Signalisierungseinrichtung (SPB) zum Durchführen von Signalisierungsfunktionen beim Verbindungsaufbau und den Überwachungsschritten,
einer Kanaldiensteinrichtung (ACSERV) zum Übertragen von Nachrichten zwischen einer Vermittlung und einem Teilnehmerendgerät, und
analogen Teilnehmerendgeräten, die mit der Vermittlung in Verbindung stehen und an Nummern-Anzeigeeinheiten zum Anzeigen der von der Vermittlung signalisierten Nummerndaten des anrufenden Teilnehmers angeschlossen sind,
**gekennzeichnet dadurch, dass** die Vermittlung folgendes aufweist:
eine Teilnehmerdatenbank (SUFA) zum Speichern von auf den Typ der Nummer-Anzeigeeinheit jedes Teilnehmerendgeräts hinweisenden Nummern-Anzeigeeinheits-Typdaten, wobei die Rufsteuereinrichtung (OCB) eingerichtet ist, um Daten von der Datenbank zu lesen,
eine Speichereinrichtung (CNDFIL) zum Speichern von Signalisierungsparameterdaten in einer Datei, getrennt für jeden der unterschiedlichen von unterschiedlichen Teilnehmerendgeräten verwendeten Typen von Nummern-Anzeigeeinheiten,
eine Teilnehmer-Signalisierungseinrichtung (SPB) zum Lesen der Signalisierungsparameterdaten für den Nummern-Anzeigeeinheitstyp, der von den von der Rufsteuereinrichtung (OCB) aus der Teilnehmerdatenbank (SUFA) gelesenen Nummern-Anzeigeeinheits-Typdaten eines angerufenen Teilnehmerendgeräts angedeutet ist, aus der Speichereinrichtung (CNDFIL)
eine Kanaldiensteinrichtung (ACSERV) zum Übertragen der Nummerndaten des anrufenden Teilnehmers zu dem angerufenen Teilnehmerendgerät in Abhängigkeit von der von dem angerufenen Teilnehmerendgerät unterstützten Signalisierungsmethode gemäß den zum von den gelesenen Signalisierungsparametern definierten Zeitpunkt gelesenen Signalisierungsparameterdaten.

8. System gemäß Anspruch 7, **dadurch gekennzeichnet, dass** die aus der Speichereinrichtung (CNDFIL) gelesenen Signalisierungsparameterdaten andeuten, dass der Übertragungszeitpunkt für die Teilnehmer-Nummerndaten vor dem ersten Klingelsignal liegt, wodurch die Vermittlung eingerichtet wird, als Reaktion auf eine von der Kanaldiensteinrichtung (ACSERV) empfangenen Bestätigung ein erstes Klingelsignal bereitzustellen, und andeuten, dass die Teilnehmer-Nummerndaten zu dem Teilnehmerendgerät übertragen wurden.

9. System gemäß Anspruch 7, **dadurch gekennzeichnet, dass** die aus der Speichereinrichtung (CNDFIL) gelesenen Signalisierungsparameterdaten andeuten, dass der Übertragungszeitpunkt für die Teilnehmer-Nummerndaten nach dem ersten Klingelsignal liegt, wodurch die Teilnehmer-Signalisierungseinrichtung (SPB) als Reaktion auf das von der Vermittlung übergebene erste Klingelsignal eingerichtet wird, einen Zeitzähler zu starten und, wenn die in dem Zähler eingestellte Zeit abgelaufen ist, eine Anforderung an die Kanaldiensteinrichtung (ACSERV) zu senden, die Nummerndaten des anrufenden Teilnehmers zu übertragen.

10. System gemäß Anspruch 7, **dadurch gekennzeichnet, dass** die aus der Speichereinrichtung (CNDFIL) gelesenen Signalisierungsparameterdaten andeuten, dass der Übertragungszeitpunkt für die Teilnehmer-Nummerndaten nach der Antwort des angerufenen Teilnehmers liegt, wodurch die Teilnehmer-Signalisierungseinrichtung (SPRB) als Reaktion auf das Abnehmen des Hörers durch den Teilnehmer eingerichtet wird, als erstes den Sprachpfad zu unterbrechen und Stille zu verbinden, und dann eine Anforderung an die Kanaldiensteinrichtung (ACSERV) zu senden, die Nummerndaten des anrufenden Teilnehmers zu übertragen.

11. System gemäß Anspruch 7, **dadurch gekennzeichnet, dass** als Reaktion auf die von der Rufsteuereinrichtung empfangenen Informationen, die die Vollständigkeit der Teilnehmer-Nummerndaten des eingehenden Rufs andeuten, die Teilnehmer-Signalisierungseinrichtung (SPB) eingerichtet wird, von den in der Speichereinrichtung (CNDFIL) gespeicherten Parametern zu lesen, welche Zeichenfolge gesendet wird.

## Revendications

1. Procédé de transfert d'un numéro d'abonné appelant à un terminal d'abonné dans un système de réseau téléphonique comprenant au moins un central comportant des moyens pour détecter des données de numéro d'abonné appelant et des moyens pour signaler les données de numéro à un terminal d'abonné d'une ligne d'abonné analogique appelée, et des terminaux d'abonnés associés à un central, les terminaux comportant des unités d'affichage de numéro pour afficher lesdites données concernant le numéro,
**caractérisé en ce que** le procédé comprend :
la mémorisation de données de type d'affichage (SUFA) indicatives du type de l'unité d'affichage de numéro de chaque terminal d'abonné,
la mémorisation de données de paramètres de signalisation séparément pour chaque type des unités d'affichage de numéro utilisées par différents terminaux d'abonnés spécifiquement au type dans un fichier (CNDFIL) situé dans lé central, et
lorsqu'une connexion est établie du central vers un terminal d'abonné, la sélection de la technique de signalisation utilisée pour signaler les données de numéro d'abonné appelant au terminal d'abonné de l'abonné appelé en fonction de la technique de signalisation prise en charge par le terminal d'abonné appelé, ladite sélection comprenant, sur la base des données de type d'affichage (SUFA) indicatives du type de l'unité d'affichage de numéro du terminal d'abonné appelé, la récupération de paramètres de signalisation du fichier de paramètres de signalisation (CNDFIL) du type de l'unité d'affichage de numéro concernée, et
la transmission (SBF) des données de numéro d'abonné appelant au terminal d'abonné appelé au moyen d'une technique de signalisation conformément auxdits paramètres de signalisation.

2. Procédé selon la revendication 1, **caractérisé en ce que** des informations indiquant le type d'unité d'affichage de numéro que l'abonné détient, sont mémorisées spécifiquement à l'abonné dans la base de données d'abonnés (SUFA), et **en ce que**, sur la base de ces informations, le fichier (CNDFIL) fait l'objet d'une recherche quant aux paramètres de signalisation utilisés par ce type d'unité d'affichage de numéro.

3. Procédé selon la revendication 1, **caractérisé en ce que** les données de paramètres de signalisation d'un terminal d'abonné comprennent des données indiquant le protocole de transmission et le moment de transmission, et si une signalisation par modem ou une signalisation par fréquence vocale est utilisée.

4. Procédé selon la revendication 3, **caractérisé en ce que** le moment de transmission pour les données de numéro d'abonné est avant le premier signal de sonnerie.

5. Procédé selon la revendication 3, **caractérisé en ce que** le moment de transmission pour les données de numéro d'abonné a lieu pendant un intervalle de silence entre des signaux de sonnerie, et après une période d'une longueur constante à partir du premier signal de sonnerie.

6. Procédé selon la revendication 3, **caractérisé en ce que** le moment de transmission est après la réponse de l'abonné.

7. Système de réseau téléphonique comportant au moins un central, comprenant :
des moyens de contrôle d'appel sortant (OCB), qui réalisent des fonctions de contrôle d'appel dans les étapes d'établissement, de sonnerie et de supervision d'appel, et qui délivrent le numéro d'abonné appelant,
des moyens de signalisation (SPB) pour réaliser des fonctions de signalisation dans les étapes d'établissement et de supervision d'appel,
des moyens de service de canal (ACSERV) pour transmettre des messages entre un central et un terminal d'abonné, et
des terminaux d'abonnés analogiques associés au central et connectés à des unités d'affichage de numéro pour afficher les données de numéro d'abonné appelant signalées par le central,
**caractérisé en ce que** le central comprend :
une base de données d'abonnés (SUFA) pour mémoriser des données de type d'unité d'affichage de numéro indicatives du type de l'unité d'affichage de numéro de chaque terminal d'abonné, les moyens de contrôle d'appel (OCB) étant agencés pour lire des données dans ladite base de données,
des moyens de mémorisation (CNDFIL) pour mémoriser dans un fichier des données de paramètres de signalisation séparément pour chacun des différents types d'unités d'affichage de numéro utilisés par différents terminaux d'abonnés,
des moyens de signalisation d'abonné (SPB), pour lire dans les moyens de mémorisation (CNDFIL) les données de paramètres de signalisation pour le type d'unité d'affichage de numéro indiqué par les données de type d'unité d'affichage de numéro d'un terminal d'abonné appelé lues dans la base de données d'abonnés (SUFA) par les moyens de contrôle d'appel (OCB),
des moyens de service de canal (ACSERV) pour transmettre les données de numéro d'abonné appelant au terminal d'abonné appelé en fonction de la technique de signalisation prise en charge par le terminal d'abonné appelé conformément aux données de paramètres de signalisation lues au moment défini par lesdits paramètres de signalisation lus.

8. Système selon la revendication 7, **caractérisé en ce que** les données de paramètre de signalisation qui ont été lues dans les moyens de mémorisation (CNDFIL) indiquent que le moment de transmission pour les données de numéro d'abonné est avant le premier signal de sonnerie, moyennant quoi le central est agencé pour délivrer un premier signal de sonnerie en réponse à un acquittement qui a été reçu des moyens de service de canal (ACSERV) et indique que les données de numéro d'abonné ont été transmises au terminal d'abonné.

9. Système selon la revendication 7, **caractérisé en ce que** les données de paramètre de signalisation qui ont été lues dans les moyens de mémorisation (CNDFIL) indiquent que le moment de transmission pour les données de numéro d'abonné est après le premier signal de sonnerie, moyennant quoi, en réponse au premier signal de sonnerie délivré par le central, les moyens de signalisation d'abonné (SPB) sont agencés pour démarrer un compteur de temps et, lorsque le temps fixé dans le compteur s'est écoulé, envoyer aux moyens de service de canal (ACSERV) une requête pour transmettre les données de numéro d'abonné appelant.

10. Système selon la revendication 7, **caractérisé en ce que** les données de paramètres de signalisation qui ont été lues dans les moyens de mémorisation (CNDFIL) indiquent que le moment de transmission pour les données de numéro d'abonné est après la réponse de l'abonné appelé, moyennant quoi, en réponse au fait que l'abonné décroche le combiné, les moyens de signalisation d'abonné (SPRB) sont agencés pour d'abord déconnecter le trajet de parole et connecter le silence, et envoyer ensuite aux moyens de service de canal (ACSERV) une requête pour transmettre les données de numéro d'abonné appelant.

11. Système selon la revendication 7, **caractérisé en ce que**, en réponse aux informations reçues des moyens de contrôle d'appel indiquant que les données de numéro d'abonné de l'appel entrant sont incomplètes, les moyens de signalisation d'abonné (SPB) sont agencés pour lire dans les paramètres mémorisés dans les moyens de mémorisation (CNDFIL) quelle séquence de caractères sera envoyée.
